# EUROPEAN PATENT SPECIFICATION

(11) **EP 4 562 311 B1**
(45) Date of publication and mention of the grant of the patent: **01.04.2026**
(21) Application number: 22755155.3
(22) Date of filing: 25.07.2022
(51) Int. Cl.: F16B 2/12, B66C 1/10, E04H 17/00, F16B 5/02, F16B 31/02

(54) **A COMPOSITE WASHER FOR FORCE INDICATION AND LOOSENING PREVENTION**
VERBUNDSCHEIBE ZUR KRAFTANZEIGE UND LOCKERUNGSVERHINDERUNG
RONDELLE COMPOSITE POUR INDICATION DE FORCE ET PRÉVENTION DE DESSERRAGE

(43) Date of publication of application: 04.06.2025
(73) Proprietor: Worxsafe AB, 831 52 Östersund (SE)
(72) Inventor: BRUNNER, Sima, 836 95 ÅS (SE)
(74) Representative: AWA Sweden AB
(86) International application number: PCT/EP2022/070756
(87) International publication number: WO 2024/022570

(56) References cited:
- WO-A1-2007/118941
- WO-A1-2017/120666
- DE-A1- 4 416 766
- FR-A1- 2 955 366
- US-A- 4 131 050
- US-A- 5 586 851

## Description

### FIELD OF THE INVENTION

The present invention relates to the field of washers and particularly washers for improving fastening of fasteners such as bolts, nuts, screws or clamps.

### BACKGROUND OF THE INVENTION

Fasteners such as bolts, screws, nuts or clamps are widely used for mechanically joining or affixing two or more objects together. In some situations, a fastener is required to be applied with a specific tightening force. If the tightening force is less than required, a fastener may loosen which may result in severe consequences. On the other hand, if the tightening force is higher than required, the excessive force applied to fasten a fastener may cause damage either to the object joined by the fastener or the fastener itself. Today torques wrenches and screwdrivers with a pre-set torque meter aim to solve this problem by allowing a user to control the applied tightening force. However, if using such tools, it's a tedious process of fastening multiple fasteners with different requirements of tightening force. In addition, many handheld tools are heavy and expensive and might even become unpractical for a fastener requiring great amounts of tightening force. Even further, using handheld automated tools for fastening fasteners which are positioned at unreachable or exposed places may be dangerous or even impossible due to lack of space.

Also, a fastener applied with exactly the required tightening force may unexpectedly loosen due to repetitive forces or vibrations which may cause a fastener to slowly loosen. Metallic washers are commonly used to prevent the loss of tightening force for fastening a fastener. Accordingly, there exists a need in the prior art to ensure that a fastener is applied with a correct tightening force while also ensuring that it remains safely tightened. DE4416766A1 discloses a known composite washer.

### SUMMARY OF THE INVENTION

At least some of the above-mentioned drawbacks are overcome by the present disclosure according to the independent claim. Preferred embodiments are set forth in the dependent claims.

In accordance with one aspect of the disclosure, there is provided a composite washer for force indication and preventing a fastener from loosening, the composite washer comprising, a top part which has a circumferential extension around an axis, an elastic part which has a circumferential extension around the axis, a base part which has a circumferential extension around the axis, wherein the top part, the elastic part and the base part are connected to each other, wherein the elastic part is arranged in-between the top part and the base part, wherein there is an central opening which has an extension along the axis throughout the top part, the elastic part and the base part, wherein the composite washer is arranged to be in a primary state where the elastic part is visible at a lateral surface thereof, and wherein the composite washer is arranged to be in a secondary state where the elastic part is compressed by the top part and base part such that the elastic part is hidden by at least one of the top part and the base part, at the lateral surface thereof.

The disclosure is based on the insight that the provided composite washer will accommodate a user with a visual aid indicating if a sufficient amount of tightening force has been applied to fasten the fastener. This indication is shown by that when the elastic part no longer is visible at the lateral surface of the composite washer, a sufficient amount of tightening force has been applied. By altering the stiffness of the elastic part, for instance by altering the shape of the elastic part, the compressive force required to compress the composite washer to its secondary state, may be modified as desired. This allows for supplying a plurality of composite washers, each with individual levels of stiffness, for a plurality of fasteners, each with an individual required tightening force. Thereby, a user is enabled to quickly fasten the plurality of fasteners according to the individual requirements of tightening force without the use of a plurality of tools nor a need of adjusting any settings of a single tool, which is advantageous. A further advantage with the present invention is that when the composite washer is compressed to its secondary state, thereby indicating that sufficient tightening force has been applied, the elastic part is entirely concealed at the lateral surface thereof. Thereby, the user will unmistakably realize that no further force is required and thus minimizing the risk of human error. In the secondary state of the composite washer, the top part and the base part does not necessarily have to reach direct contact to conceal the elastic part at the lateral surface of the composite washer. For example, the top part and the base part may overlap or be sufficiently close to contact to conceal the elastic part from being visible at the lateral surface of the composite washer. A further advantage of the disclosure is that the elastic material will visually indicate if the tightening force is loosened over time. A user visually inspecting a fastener will instantly realize, from seeing the elastic part at the lateral side of the composite washer, that the fastening element requires tightening. Thereby, the composite washer according to the disclosure enables quick and safe inspection of a large number of fasteners. Even further, the elastic material is, as a reaction when being compressed, pressing against the top part and the base part. Thus, the composite washer is applying an expansive force towards the fastener and the object the fasteners is fastened towards. From this, the friction between the fastening element and the object it is fastened against is increased, which is advantageous for improving the fastening element's resistance against rotation. This is further advantageous to reduce the risk of the fastening element coming loose due to vibrations from shifting load on the fastening element. There is thus provided a composite washer which is indicating the tightening force on a fastener and counteracting loosening of the fastener.

In accordance with a further embodiment, the elastic part has a longitudinal extension along the axis, from an upper portion, via a mid-portion, to a lower portion thereof, wherein, when the elastic part is uncompressed, a first inner diameter at the upper portion is different from a second inner diameter at the mid-portion. This provides for that the elastic part may be smoothly compressed when the composite washer is compressed from its primary to secondary state. The risk that the elastic part receives undesired and potentially harmful oblique deformations during compression, is thereby greatly reduced. This is advantageous for extending the life span of the composite washer. Altering at least one of the first or the second inner diameter of the upper portion and the mid-portion may further enable the compressive resistance of the elastic part to be non-linear. For example, the amount of added tightening force required for compressing the composite washer a specific distance may be increased the closer the composite washer is to its secondary state. This may be beneficial when fastening a fastener as for preventing the fastened fastener from loosening.

In accordance with a further embodiment, the first inner diameter is smaller than the second inner diameter. This provides for that the mid-portion of the elastic part is thinner than at least one of the upper portion and the lower portion. This is advantageous for enabling a homogeneous deformation of the elastic part when compressed by the top part and the base part. Further, it may reduce the risk of the elastic part receiving damages due to pinching.

In accordance with a further embodiment, the elastic part comprises a groove circumferentially extending around an inner surface of the elastic part facing the axis. This provides for that a deformation of the elastic part is controlled by the groove, thus the groove is also helping to controlling a line of motion of the top part and the base part when the composite washer is compressed from its primary state to its secondary state. This is advantageous for promoting that the line of motion is aligned with the direction of the axis.

In accordance with a further embodiment, the elastic part is in direct contact with the top part and the base part. This enables a user to a higher extent modify the friction between the elastic part, the top part, and the base part. If desired, said parts may be altered as to have a high friction connection. This improves the said parts' ability to withstand rotational motion relative to each other. This is advantageous for not creating rotational wear of the components of the composite washer, thus extending its life span. Alternatively, said parts may be altered to have a low friction connection to enable said part to rotate around the axis relative to each other. Further, the elastic part may be glued directly to at least one of the top part and the base part, which is further advantageous for preventing detachment due to internal rotation.

In accordance with a further embodiment, the elastic part is made by the material polyurethan. This provides for a number of advantages. Polyurethan has great thermal stability. This is advantageous for ensuring that the mechanical properties of the elastic part are not significantly affected by the temperature during expected outdoor temperature ranges. A user can therefore rely on the composite washer's accuracy of correctly indicating the required tensioning force, regardless of outdoor temperature. Polyurethan is further advantageous since it has a great durability to chemicals, oil and water. Also, polyurethan is durable against wear and exterior blows, allowing it to resist great amounts of force without permanent deformations. Polyurethan further has the advantage that it is easy to colour as well as to make transparent. It is also conceivable that the elastic material is EPDM rubber. Using EPDM rubber is advantageous since it has great durability against UV-radiation, chemicals and water. EPDM is further advantageous since it has great shock absorbing characteristics. Even further, EPDM shows very small changes as an effect of temperature, making it suitable to use in the composite washer used in the outdoors.

In accordance with a further embodiment, the elastic part has a visually distinct colour, such as red or green. This provides for facilitating a user to visually recognise the elastic part. This is advantageous for ensuring the visual load indicating function of the composite washer. Using a colour associated with a meaning may be advantageous, red may for example signal danger, while green may be used to signal safety.

In accordance with a further embodiment, the elastic part is fluorescent. This provides for that the elastic part emits light that has been absorbed from a light source or any other electromagnetic radiation. This is advantageous for facilitating for a user to determine if the elastic part is visible at the lateral surface of the composite washer. It is specifically advantageous during night-time since the visibility of fluorescent light is enforced in darkness.

In accordance with a further embodiment, the elastic part is glued to the top part and the base part. This provides for an easy assembly of the composite washer. It is further advantageous for creating a homogenous contact surface between the elastic part the top part and the base part.

In accordance with a further embodiment, the top part comprises an outer top wall portion which circumferentially extends around the axis and wherein the outer top wall portion has a longitudinal extension towards the base part wherein the base part comprises an outer base wall portion which circumferentially extends around the axis wherein the outer base wall portion has a longitudinal extension towards the top part. This provides for that the top wall portion and the base wall portion may restrain the deformation of the elastic part at its radial outer end. The top wall portion and the base wall portion may also act as protective surfaces of the composite washer.

In accordance with a further embodiment, the outer top wall portion and the outer base wall portion are arranged to be separated in the primary state and to be in contact in the secondary state. This provides for that the top wall portion and the base wall portion may stop the compression of the composite washer. This is advantageous for preventing that the elastic part receives an excessively high compressive force leading to damages. The composite washer is preferably designed such that when the top wall portion and the base wall portion are placed in contact, a sufficient amount of tightening is applied. Further, when the composite washer is compressed to its secondary state, a user applying the tightening force will instantly feel that the compression of the composite washer is hindered, since the composite washer becomes static. Thereby, the user knows sufficient amount of force is applied. This is advantageous for avoiding to apply too much tightening force to a fastener.

In accordance with a further embodiment, the outer top wall portion is arranged at an outer circumference of the top part and wherein the outer base wall portion is arranged at an outer circumference of the base part.

In accordance with a further embodiment, the top part comprises a top engagement portion which is engaged with the elastic part such that the connection between the elastic part and the top part is maintained, and wherein and the base part comprises a base engagement portion, which is engaged with the elastic part such that the connection between the elastic part and the base part is maintained. This provides for that the top part, the elastic part and the base part are not required to be attached to each other by other means than by the top engagement portion and the base engagement portion. To enable the top engagement portion and the base engagement portion to engage with the elastic part, the elastic part is preferably shaped such that its first inner diameter at its upper portion and a third inner diameter at its lower portion are smaller than the second inner diameter of its mid-portion. The elastic part may for example be C-shaped. An elastic part with a C-shaped cross section may be arranged such that the top engagement portion is engaged with the upper part of the C-shaped cross section and the base engagement portion is engaged with the lower part of the C-shaped cross section. The top engagement portion and the base engagement portion are preferably engaged with the elastic part such as the connection between the top part, the elastic part and the base part is maintained when using the composite washer according to its intended use. Further, the connection is preferably not strong enough to prevent a user to disassembly the composite washer if desired. It is further conceivable that if the top part, the base part and the elastic part are only attached to each other by means of the top engagement portion and the base engagement portion, it could be desired to enable the top part, the base part and the elastic part to independently rotate around the axis relative to each other. To promote this, surfaces of the top part and the base part that are in direct contact with the elastic part, when the composite washer is in its primary or secondary state, are preferably smooth for creating a low friction connection between said surfaces and the elastic part. This is advantageous for increasing the clamping force of the fastener in relation to the applied tightening force.

In accordance with a further embodiment, the top engagement portion comprises a first inclined surface which circumferentially extends around the axis and wherein the first inclined surface faces away from the axis and towards the base part and wherein the base engagement portion comprises a second inclined surface which circumferentially extends around the axis wherein the second inclined surface faces away from the axis and towards the top part. This provides for enabling easy assembly of the composite washer. The first and the second inclined surface allow the elastic part to, with minimal force, slide into its intended position where it engages with the top engagement portion and the base engagement portion. The top and base engagement portion are further ensuring that the elastic part remains at its intended position.

In accordance with a further embodiment, the top part comprises a first contact portion and the base part comprises a second contact portion wherein the first contact portion is in direct contact with the second contact portion. This provides for that the top part and the base part are in contact in the primary state and the secondary state of the composite washer. Thereby, the top part may restrain the base part in at least one direction. This is advantageous to avoid undesired displacements of the base part in relation to the top part.

In accordance with a further embodiment, the first contact portion restricts the second contact portion from transversal movement in a plane perpendicular to the axis. This provides for that the top part will be restrain movement of the base part within the plane perpendicular to the axis. This is advantageous to ensure that the top part and the base part are, in relation to each other, only displaced along the direction of the axis, thus avoiding oblique loading, or similar.

In accordance with a further embodiment, the first contact portion comprises a first locking element and the second contact portion comprises a second locking element wherein the first locking element is engaged with the second locking element such that the connection between the first contact portion and the second contact portion is maintained.

This provides for that the top part, the elastic part and the base part may remain connected thanks to the first locking element and the second locking element. Further, the composite washer may advantageously be assembled by compressing the top part towards the base part along the axis. The first contact portion and the second contact portion are preferably connected with a force that sufficiently high to uphold the connection of the composite washer during its intended use, while the force is sufficiently low for enabling disassembly of the washer if desired.

In accordance with a further embodiment, at least one of the top part and the base part comprises inner recesses in an inner surface being in contact with the elastic part. This provides for an improved capacity to apply glue to the top part and to the base part. The inner recesses are advantageous because more glue is enabled to be applied in-between the top part or the base part and the elastic part. The inner recesses are further advantageous since they provide an irregular surface which may improve the binding capacity of the glue towards the top part or the base part.

In accordance with a further embodiment, at least one of the top part and the base part comprises an outer surface which is perpendicular to the axis and faces away from the elastic part wherein the outer surface comprises outer recesses. This provides for an improved capacity to withstand rotational motion, which is advantageous since the top part, or the base part, may via the outer recesses lock against either the fastening element (nut, bolt, screw) or the object the fastener is fastened against. Thereby, rotational motion of the composite washer in relation to either of above objects is obstructed. This is advantageous for preventing loosening of the fastener.

In accordance with a further embodiment, the outer recesses extend radially of the axis. This provides for that the outer recesses are angled in a transversal direction towards the rotational direction of the composite washer, which is advantageous to provide for rotational resistance against the fastener or the object that the fastener is fastened against.

In accordance with a further embodiment, there is provided a system for anchoring a post for a fence to a building construction, comprising a composite washer. Using the composite washer as a load indicator for fasteners for fences on buildings construction is particularly advantageous since the consequences of a fastener which unexpectedly loosens are severe. The composite washer will by visual inspection indicate if the applied tightening force is sufficient for a safe fastening of a fence. The composite washer allowing visual inspection is further advantageous for a fence on a building construction since the fasteners where the composite washer is applied, may be arranged at an exposed position. Thus, the position may be difficult or dangerous to reach. Thereby, by using the composite washer and a load indicator, the requirement to apply torque to fastener for inspection is removed.

In accordance with a further embodiment, the system further comprises a clamp for clamping a structure with a clamping force, wherein the composite washer is arranged such that it is compressed by the clamping force. This provides for that the composite washer may indicate the clamping force of the clamp. Arranging the composite washer such that it is compressed by the clamping force is further advantageous since the composite washer will always be compressed when clamp is clamping a structure. Thus, a user will be certain that the composite washer is not forgotten and will automatically be reminded by the force indicating composite washer that sufficient amount of clamping force has been applied. Additionally, the clamp will automatically be prevented from loosening thanks to expansive effect of the composite washer when compressed.

In accordance with a further embodiment, the system further comprising a wing nut arranged for compressing the composite washer and the clamp. By providing a wing nut a user is able to, for example, use a hammer to apply tensioning force on the wing nut and thereby tensioning the system for anchoring a post. This is advantageous since the user is able to apply large amounts of force while still being ensured that the applied force is within the desired tensioning range, thanks to the composite washer.

In accordance with a further embodiment, the composite washer is used as a safe load indicator. This provides for that the visual indicator of the composite washer may be used to signal the load is within the range of a lifting device. This is advantageous to prevent lift overloading, i.e. when a load is greater than the lifting capacity of a lift.

In accordance with a further embodiment, there is provided a system for indicating safe lifting force comprising a composite washer. In accordance with a further embodiment, the system for indicating safe lifting force further comprising a lower lifting pin comprising a lower flat portion and a lifting portion and an upper lifting pin comprising an upper flat portion and a carrier portion, wherein the lifting portion is arranged for being lifted and the carrier portion is arranged for carrying a load, wherein the washer is arranged between the lifting portion and the carrier portion such that when the system is lifted and carries a load, the lower flat part and the upper flat part is arranged to compress the composite washer along the axis.

In accordance with a further embodiment, the lower flat portion comprises a lower aperture and the upper flat portion comprises an upper aperture, and wherein the carrier portion and the lifting portion are arranged to extend through the lower aperture and the upper aperture, respectively. This provides for a system which may be used in combination with a lifting device for indication of safe lifting force. By providing apertures in the upper and lower lifting pin, the lateral surface of the composite washer may be completely visible for the user. This is advantageous for enabling a user to as clear as possible see the load indication that is given by the composite washer. The components of the composite washer is preferably adapted such that as long as the composite washer doesn't reach its secondary state, the load is less than the capacity of the lifting device.

### BRIEF DESCRIPTION OF THE DRAWINGS

The disclosure is described in the following illustrative and non-limiting detailed description of exemplary embodiments, with reference to the appended drawings, wherein:
Fig. 1 is a visualization of a composite washer according to an embodiment of the present disclosure.
Fig. 2a and 2b is a visualization of the composite washer of Fig. 1 in its primary state and its secondary state.
Fig. 3 is a cross-sectional view of a composite washer according to an embodiment of the present disclosure.
Fig. 4-10 show further embodiments of the present disclosure.
Fig. 11 shows a system for anchoring a post for a fence to a building construction, comprising a composite washer.
Fig. 12-13 shows a further embodiment of a system for anchoring a post for a fence to a building construction, comprising a composite washer and a clamp.
Fig. 14 is a visualization of a system for indicating safe lifting force.
Fig. 15 is an exploded view of components comprised in the system for indicating safe lifting force.

All figures are schematic, not necessarily to scale, and generally only show parts which are necessary in order to elucidate the disclosure, wherein other parts may be omitted or merely suggested. Throughout the figures the same reference signs designate the same, or essentially the same features.

### DESCRIPTION OF EMBODIMENTS

For sake of simplicity constructional details have been left out in the following description, which may be considered basic knowledge of the skilled person, and which do not contribute to describing the essence of the inventive concept.

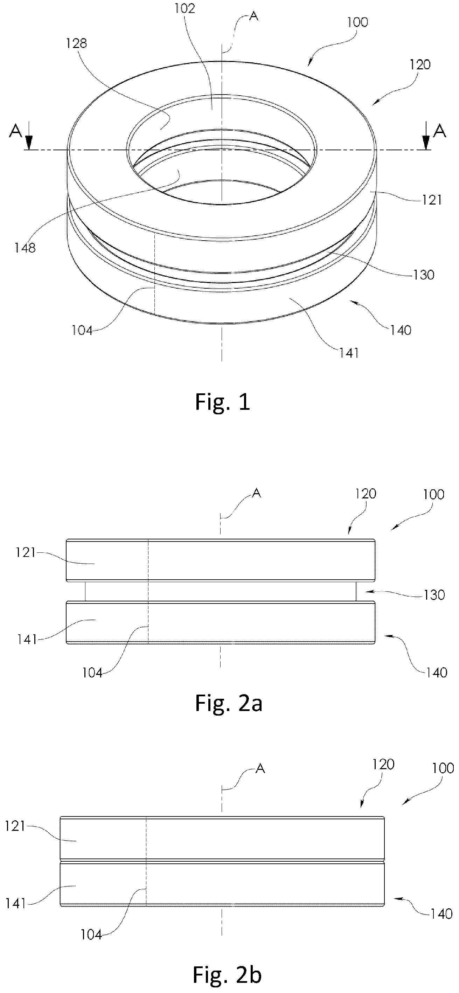

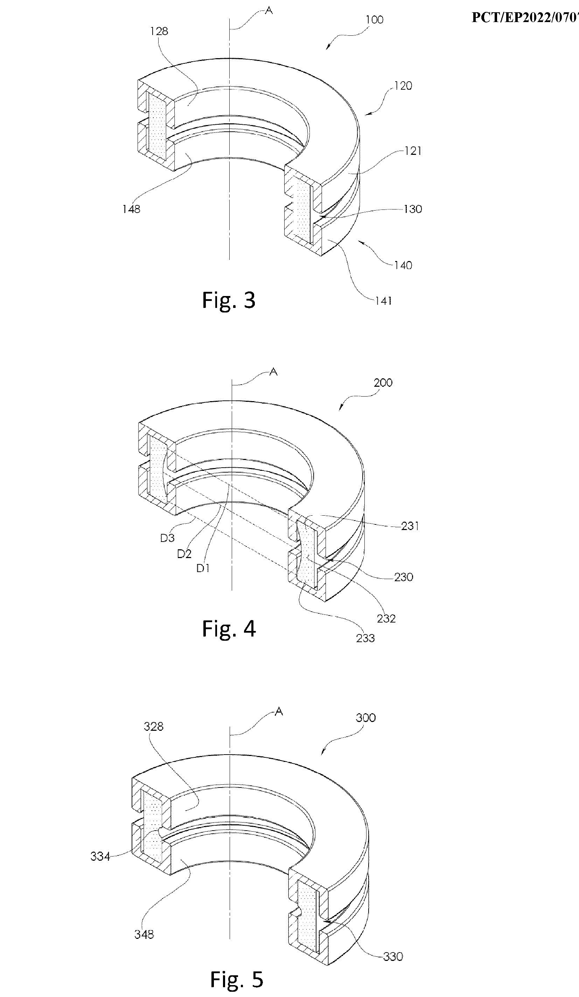

A first exemplifying embodiment of a composite washer 100 is now described with reference to figures 1, 2a, 2b and 3. Figure 1 shows a composite washer 100 comprising a top part 120, an elastic part 130 and a base part 140. The top part 120 has a circumferential extension around an axis A. The elastic part 130 has a circumferential extension around the axis A. The base part 140 has a circumferential extension around the axis A. The top part 120, the elastic part 130 and the base part 140 are connected to each other wherein the elastic part 130 is arranged in-between the top part 120 and the base part 140 such that there is a central opening 102 along the axis A, through the top part 120, the elastic part 130 and the base part 140. The central opening 102 has a sufficiently large diameter to enable a portion of a desired member, such as a shank of a fastener, to extend through the central opening 102. In the disclosed embodiment, the top part 120 comprises an outer top wall portion 121 and an inner top wall portion 128 which circumferentially extend around the axis A. The outer top wall portion 121 and the inner top wall portion 128 have a longitudinal extension, which is parallel to the axis A, towards the base part 140. The outer top wall portion 121 is further arranged at an outer circumference of the top part 120 and the inner top wall portion 128 is arranged at an inner circumference of the top part 120. The base part 140 comprises an outer base wall portion 141 and an inner base wall portion 148 which circumferentially extends around the axis A. The outer base wall portion 141 and the inner base wall portion 148 has a longitudinal extension, which is parallel to the axis A, towards the top part 120. The outer base wall portion 141 is arranged at an outer circumference of the base part 140 and the inner base wall portion 148 is arranged at an inner circumference of the base part 140. The top part 120 and the base part 140 are preferably made of a metal such as steel or aluminium. It is however conceivable that the top part 120 or the base part 140 may be made out of any stiff durable material. The elastic part 130 is made from an elastic material, and preferably polyurethan. It is also conceivable that the elastic part 130 is made from, for instance, EPDM rubber. The composite washer 100 in figure 1 is shown in a primary state S1. In the shown embodiment the elastic part 130 is glued to the top part 120 and the base part 140. When the composite washer 100 is in its primary state S1, the top part 120 is not in direct contact with the base part 140. Thus, the elastic part 130 is visible at a lateral surface 104 of the composite washer 100. The elastic part 130 has preferably been coloured with a visually distinct colour, such as red or green. Alternatively, the elastic part 130 may be fluorescent. Figures 2a and 2b show the primary state S1 and a secondary state S2 of the composite washer 100, respectively. The composite washer 100 is arranged to be in its primary state S1 when uncompressed. In the primary state S1 the top part 120 and the base part 140 are separated by the elastic part 130. Thus, the elastic part 130 is visible at the lateral surface of the composite washer 100. The composite washer 100 is arranged to be compressed along the axis A such that the composite washer 100 is compressed into its secondary state S2. When the composite washer 100 is in its secondary state S2, the elastic part 130 is hidden by the top part 120 and the base part 140, at the lateral surface 104 thereof. In the present embodiment, the composite washer 100 is further configured such that the outer top wall portion 121 and the outer base wall portion 141 are separated in the primary state S1 and in contact in the secondary state S2. As seen in figure 1, the inner top wall portion 128 and the inner base wall portion 148 are similarly arranged such as they are separated in the primary state S1 and in contact in the secondary state S2. Figure 3 shows the cross section A-A from figure 1 of the composite washer 100 in its primary state S1. The elastic part 130 has a longitudinal extension which is parallel to the direction of the axis A. In the shown embodiment the elastic part 130 has a rectangular cross section. The elastic part 130 is in direct contact with the top part 120 and the base part 140.

A total of seven further exemplifying embodiments of a composite washer 200, 300, 400, 500, 600, 700 and 800 are now described with reference to figure 4-10. All of the seven exemplifying embodiments have basically a similar construction as the first exemplifying embodiment of the composite washer 100 described with reference to figure 1, 2a, 2b and 3. The naming of details is similar for all seven further embodiments, with the exception of the initial number of the numbering references which refers to respective exemplifying embodiment of the composite washer.

The second exemplifying embodiment of the composite washer 200 is now described with reference to figure 4. Figure 4 shows a cross section of the composite washer 200, wherein the washer is in its primary state S1. The elastic part 230 has a longitudinal extension in the direction of the axis A, from an upper portion 231, via a mid-portion 232, to a lower portion 233. The elastic part 230 has a first inner diameter D1 at the upper portion 231 which is smaller than a second inner diameter D2 at the mid-portion 232, wherein a third inner diameter D3 is smaller than the second inner diameter D2. Thus, the elastic part 230 is provided with a concave inner surface.

The third exemplifying embodiment of the composite washer 300 is now described with reference to figure 5. Figure 5 shows the composite washer 300, wherein the washer is in its primary state S1. In the shown embodiment, the elastic part 330 comprises a groove 334 which has a circumferential extension around an inner surface of the elastic part 330 which is facing the axis A. The groove 334 has a concave shape, which in the shown embodiment is positioned on the elastic part in between the inner top wall portion 328 and the inner base wall portion 348.

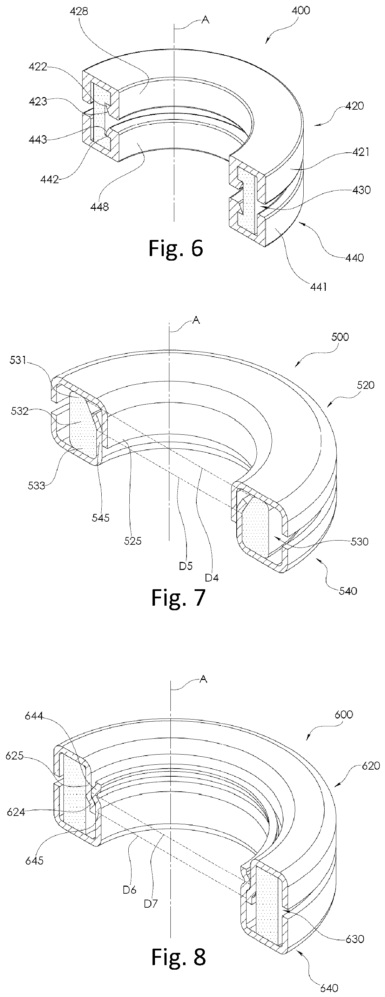

The fourth exemplifying embodiment of the composite washer 400 is now described with reference to figure 6. Figure 6 shows the composite washer 400, wherein the washer is in its primary state S1. In the shown embodiment the top part 420 comprises a top engagement portion 422. The top engagement portion 422 is engaged with the elastic part 430 such that the connection between the elastic part 430 and the top part 420 is maintained. More particularly, the top engagement portion 422 is protruding radially from the inner top wall portion 428 at an end thereof that is closest to the base part 440, in a direction away from the axis A. In other words, the top engagement portion 422 constitutes a lip extending radially outwards from the inner top wall portion 428. The top engagement portion 422 has a circumferential extension around the axis A. The top engagement portion 422 projects away from the axis A with a distance that is sufficiently long for it to engage with the elastic part 430 for maintaining the connection in-between the top part 420 and the elastic part 430. Further, the base part 440 comprises a base engagement portion 442. The base engagement portion 442 is engaged with the elastic part 430 such that the connection between the elastic part 430 and the base part 440 is maintained. More particularly, the base engagement portion 442 is protruding radially from the inner base wall portion 448 at an end thereof that is closest to the top part 420, in a direction away from the axis A. In other words, the base engagement portion 442 constitutes a lip extending radially outwards from the inner base wall portion 448. The base engagement portion 442 has a circumferential extension around the axis A. The base engagement portion 442 projects away from the Axis A with a distance that is sufficient long for it to engage with the elastic part 430 for maintaining the connection in-between the base part 440 and the elastic part 430. In the present embodiment, the elastic part 430 has a C-shaped radial cross section. This is for improving the ability of the top engagement portion 422 and the base engagement portion 442 to engage with the elastic part 430. As shown in figure 6, the top engagement portion 422 is engaged with an upper portion of the C-shaped cross section of the elastic part 430, and the base engagement portion 442 is engaged with a lower portion of the C-shaped cross section of the elastic part 430. The interconnection of the top part 420, the elastic part 430 and the base part 440 is preferably sufficiently high to maintain the interconnection when using the composite washer 400 according to its intended use and preferably sufficiently low to enabling a user to disassemble the composite washer 400 if desired. In the present embodiment, the top engagement portion 422 comprises a first inclined surface 423 which circumferentially extends around the axis A and which faces away from the axis A and towards the base part 440. Further, the base engagement portion 442 comprises a second inclined surface 423 which circumferentially extends around the axis A and which faces away from the axis A and towards the top part 420.

The fifth exemplifying embodiment of the composite washer 500 is now described with reference to figure 7. Figure 7 shows the composite washer 500 wherein the washer is in its primary state S1. In the shown embodiment the top part 520 comprises a first contact portion 525 and the base part 540 comprises a second contact portion 545. The first contact portion 525 is in direct contact with the second contact portion 545 in the primary state S1 of the composite washer 500 and in the secondary state S2 of the composite washer. In the shown embodiment, the first contact portion 525 has a circumferential extension around the axis A and a longitudinal extension that is parallel with the axis A towards the base part 540. The second contact portion 545 has a circumferential extension around the axis A and the first contact portion 525, and a longitudinal extension that is parallel with the axis A towards the top part 520, wherein a part of the first contact portion 525 and a part of the second contact portion 545 extend in parallel. The first contact portion 525 and the second contact portion 545 are engaged with each other such that they restrict each other from relative movement in a plane perpendicular to the axis A. In other words, the first and second contact portions 525, 545 are generally arranged concentrically of each other. In the shown embodiment, the elastic part 530 has a fourth inner diameter D4 at an upper portion 531 of the elastic part 530 which is greater than a fifth inner diameter D5 at the mid-portion 532 of the elastic part 530.

The sixth exemplifying embodiment of the composite washer 600 is now described with reference to figure 8. Figure 8 shows the composite washer 600, wherein in the washer is in its primary state S1. As opposed to the composite washer shown in figure 7, the first contact portion 625 has a circumferential extension around the second contact portion 645. The first contact portion 625 comprises a first locking element 624, which is circumferentially extending around the axis A. In the shown embodiment, the first locking element 624 comprises a circumferential surface with a sixth inner diameter D6 slightly smaller than a seventh inner diameter D7 of the rest of the first contact portion 625. The second contact portion 645 comprises a second locking element 644. The second locking element 644 is circumferentially extending around the axis A and is arranged to have an outer diameter which is greater than the sixth inner diameter D6 of the first locking element 624. The first locking element 624 is arranged to, when the composite washer 600 is in its primary state S1, be engaged with the second locking element 644 such that the connection between the first contact portion 625 and the second contact portion 645 is maintained. Thereby, the second locking element 644 is, by abutting towards the first locking element 624, restraining the base part 640 from moving away from the top part 620.

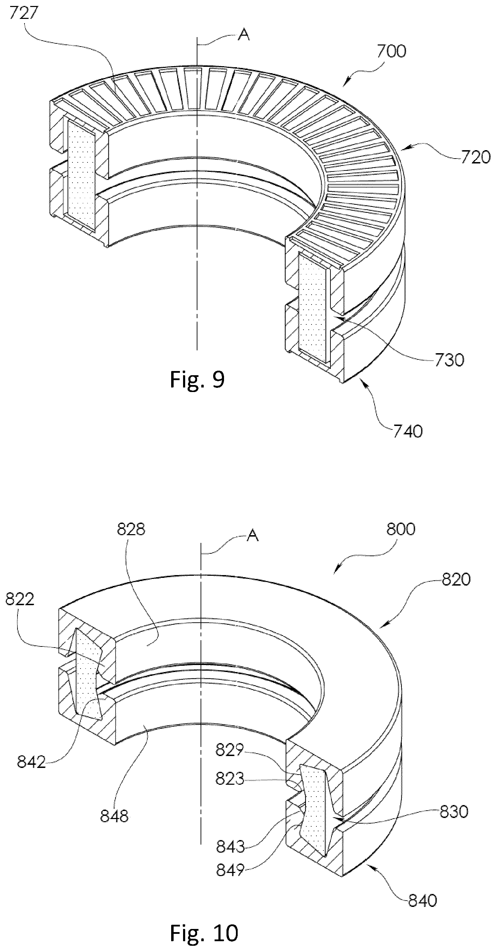

The seventh exemplifying embodiment of the composite washer 700 is now described with reference to figure 9. Figure 9 shows the composite washer 700 according to a further embodiment. The top part 720 comprises inner recesses (not shown), on an inner surface of the top part 720, which inner surface is perpendicular to the axis A and in contact with the elastic part 730. The base part 740 comprises inner recesses (not shown) on an inner surface of the base part 740, which inner surface is perpendicular to the axis A and is in contact with the elastic part 730. The inner recesses of the top part and the inner recesses of the base part 740 are radially extending from the axis A and are equally distributed. In the shown embodiment, the top part 720 further comprises an outer surface which is perpendicular to the axis A and faces away from the elastic part 730, wherein the outer surface comprises outer recesses 727. The outer recesses 727 extend radially of the axis A. The base part 740 further comprises an outer surface which is perpendicular to the Axis A and faces away from the elastic part 730 and comprises similar outer recesses (not shown), which extend radially of the axis A.

The eighth exemplifying embodiment of the composite washer 800 is now described with reference to figure 10. Figure 10 shows the composite washer 800, wherein the washer is in its primary state S1. The composite washer 800 comprises a top part 820, an elastic part 830 and a base part 840. The top part 820 comprises an inner top wall portion 828 and a top engagement portion 822. The inner top wall portion 828 and the top engagement portion 822 have a similar function as the inner top wall portion 428 and the top engagement portion 422 shown in the fourth exemplified embodiment shown in figure 6. The top engagement portion 822 is engaged with the elastic part 830 such that the connection between the elastic part 830 and the top part 820 is maintained. More particularly, the top engagement portion 822 is protruding radially from the inner top wall portion 828 at an end thereof that is closest to the base part 840, in a direction away from the axis A. The base part 840 comprises an inner base wall portion 848 and a base engagement portion 842. The inner base wall portion 848 and the base engagement portion 842 have a similar function as the inner base wall portion 448 and the base engagement portion 442 shown in the fourth exemplifying embodiment shown in figure 6. The base engagement portion 842 is engaged with the elastic part 830 such that the connection between the elastic part 830 and the base part 840 is maintained. More particularly, the base engagement portion 842 is protruding radially from the inner base wall portion 848 at an end thereof that is closest to the top part 820, in a direction away from the axis A. In the present embodiment, the top engagement portion 822 comprises a first inclined surface 823 which circumferentially extends around the axis A and which faces away from the axis A and towards the base part 840. The base engagement portion 842 comprises a second inclined surface 843 which circumferentially extends around the axis A and which faces away from the axis A and towards the top part 820. The top engagement portion 822 comprises a third inclined surface 829, which circumferentially extends around the axis A and which faces away from the axis A and away from the base part 840. The base engagement portion 842 comprises a fourth inclined surface 849 which circumferentially extends around the axis A and which faces away from the axis A and away from the top part 820. The third and the fourth inclined surfaces are engaged with the elastic part 830, thus having corresponding inclined surface portions.

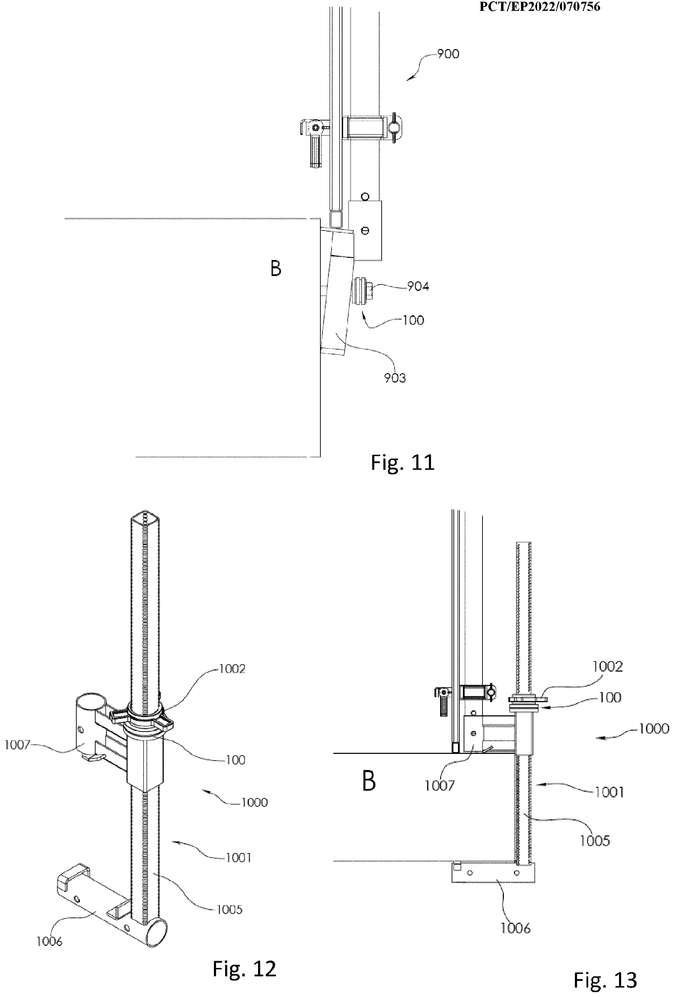

A total of two exemplifying embodiments of a system 900, 1000 for anchoring a post for a fence to a building construction are now described with reference to figure 11-13.

The first exemplifying embodiment of the system 900 for anchoring a post for a fence to a building construction is now described with reference to figure 11. Figure 11 shows the system 900 for anchoring a post for a fence to a building construction, comprising the composite washer 100. The system 900 comprises an anchoring structure 903 and a fastener 904 arranged to fasten the anchoring structure 903 to a building structure B. In the shown embodiment the fastener 904 is a concrete bolt. The composite washer 100 is arranged between the fastener 904 and the anchoring structure 903 such that it becomes compressed when the anchoring structure 903 is secured to the building structure B by means of the fastener 904. A shank of the fastener 904 extends through the central opening 102 of the composite washer 100. The composite washer 100 is further arranged to be compressed into its secondary state S2 when a required tensioning force has been applied to the fastener 904. It is conceivable that the fastener may be other types of fasteners than a bolt, such as a screw or a nut.

The second exemplifying embodiment of the system 1000 for anchoring a post for a fence to a building construction is now described with reference to figure 12 and 13. Figure 12 and 13 shows a system 1000 for anchoring a post for a fence to a building construction according to a further embodiment. The system 1000 comprises a clamp 1001 for clamping a structure of the building construction with a clamping force and the composite washer 100. The composite washer 100 is arranged such that it is compressed by the clamping force. The system 1000 for anchoring a post for a fence further comprises a wing nut 1002 arranged for compressing the composite washer 100 while tensioning the clamp 1001. The clamp 1001 may further comprise a threaded rod 1005, a fixed clamping member 1006 attached to one end of the threaded rod 1005, and a movable clamping member 1007 arranged at the threaded rod 1003 such that it is movable along the threaded rod 1005. The wing nut 1002 is in threaded engagement with the threaded rod 1005. When a user arranges the clamp at a structure, with the clamping members 1006, 1007 in contact with opposite sides of structure, such as a floor, and tightens the wing nut 1002, the composite washer 100 becomes compressed. When the elastic part is no longer visible between the top and base parts of the composite washer 100, a sufficient clamping force has been reached.

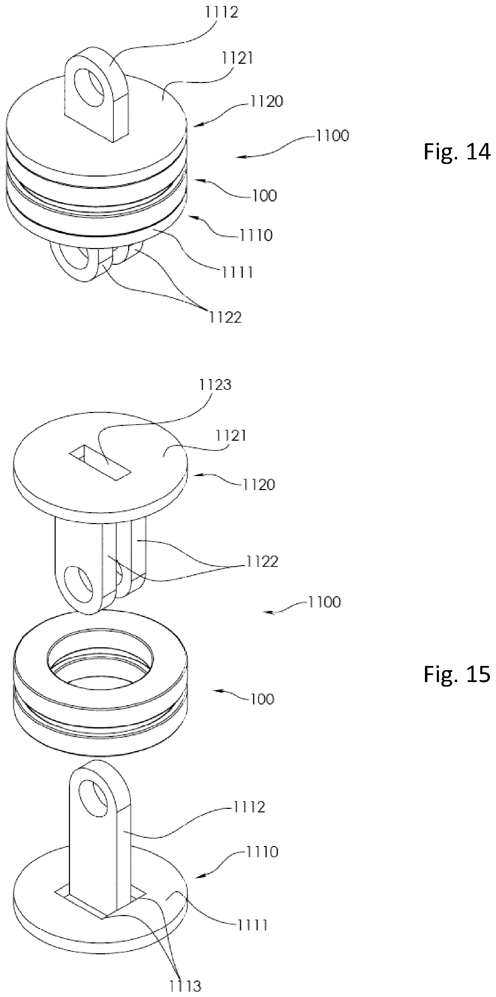

Figure 14-15 shows a system 1100 for indicating safe lifting force comprising a composite washer 100. The system 1100 for indicating a safe lifting force comprising a lower lifting pin 1110 and an upper lifting pin 1120. An exploded view of the system 1100 is shown in the figure 14. The lower lifting pin 1110 comprises a lower flat portion 1111 shaped as a circular plate, and a lifting portion 1112, connected to the lower flat portion 1111 at the centre thereof such that the lifting portion 1112 projects in a direction which is perpendicular a flat surface of the lower flat portion 1111. The lifting portion 1112 comprises an opening at an end thereof, which end is the end that is furthest away from the lower flat portion 1111. Further, the lower flat portion 1111 comprises two lower apertures 1113, one on each side of the lifting portion 1112 and equally distanced from the centre of the lower flat portion 1111. The system for indicating a safe lifting force 6 further comprises an upper lifting pin 1120. The upper lifting pin 1120 comprising an upper flat portion 1121 shaped as a circular plate and a carrier portion 1122. The carrier portion comprises two arms, which are connected to the upper flat portion 1121 and projects in a perpendicular direction from the circular plate surface of the upper flat portion 1121. Each of the two arms of the carrier portion 1122, at an end thereof that is furthest away from the upper flat portion 1121, comprises an opening for attaching a load. The upper flat portion 1121 comprises an upper aperture 1123 at its centre. The system 1100 for indicating safe lifting force is assembled such that the composite washer 100 is mounted on the lower lifting pin 1110 such that the lifting portion 1112 extends through the opening of the composite washer 100. The upper lifting pin 1120 is mounted together with the lower lifting pin 1110 and the composite washer 100 such that the lifting portion 1112 extends through the upper aperture 1123 of the upper lifting pin 1120 and such that that the two arms of the carrier portion 1122 extend through the opening of the composite washer 100 and both apertures 1113 of the lower lifting pin. A load is attached to the upper lifting pin 1120. The system 1100 for indicating safe lifting force may thereafter be lifted, by a lifting device, in the openings of the lower lifting pin 1110, and carry a load attached to two openings of the upper lifting pin 1120. When system 1100 for indicating safe lifting force is lifted, the lower flat portion 1111 and the upper flat portion 1121 will compress the composite washer 100 with a force equal to the lifting force. The composite washer 100 is preferably modified such as to not be fully compressed so that it reaches is secondary state S2 as long as the lifting force is within a safe load for the lifting device. A user using the system will thus have a visual indicator showing if the lifting force is within the safe limit of the lifting device. The elastic part 130 of the composite washer 100 is preferably coloured with a visually distinct colour such as green.

While the disclosure has been illustrated and described in detail in the drawings and foregoing description, such illustration and description are to be considered illustrative or exemplary and not restrictive. The disclosure is not limited to the disclosed embodiments.

Other variations to the disclosed embodiments can be understood and effected by those skilled in the art in practicing the claimed disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A composite washer (100) for force indication and preventing a fastener from loosening, the composite washer comprising,
a top part (120) which has a circumferential extension around an axis (A),
an elastic part (130) which has a circumferential extension around the axis,
a base part (140) which has a circumferential extension around the axis,
wherein the top part, the elastic part and the base part are connected to each other,
wherein the elastic part is arranged in-between the top part and the base part, wherein there is a central opening (102) which has an extension along the axis throughout the top part, the elastic part and the base part,
wherein the composite washer is arranged to be in a primary state where the elastic part is visible at a lateral surface thereof, and
wherein the composite washer is arranged to be in a secondary state where the elastic part is compressed by the top part and base part such that the elastic part is hidden by at least one of the top part and the base part, at the lateral surface thereof.

2. A composite washer (200) according to claim 1 wherein the elastic part (230) has a longitudinal extension along the axis (A), from an upper portion (231), via a mid-portion (232), to a lower portion (233) thereof, wherein, when the elastic part is uncompressed, a first inner diameter (D1) at the upper portion is different from a second inner diameter (D2) at the mid-portion.

3. A composite washer (200) according to claim 2 wherein the first inner diameter (D1) is smaller than the second inner diameter (D2).

4. A composite washer (300) according to any preceding claim wherein the elastic part (330) comprises a groove (334) circumferentially extending around an inner surface of the elastic part (330) facing the axis (A).

5. A composite washer (100) according to any preceding claim wherein the elastic part (130) is made by the material polyurethan.

6. A composite washer (100) according to any preceding claim, wherein the top part (120) comprises an outer top wall portion (121) which circumferentially extends around the axis (A), wherein the outer top wall portion has a longitudinal extension towards the base part (140), wherein the base part comprises an outer base wall portion (141) which circumferentially extends around the axis, and wherein the outer base wall portion has a longitudinal extension towards the top part.

7. A composite washer (400) according to any preceding claim, wherein the top part (420) comprises a top engagement portion (422) which is engaged with the elastic part (430) such that the connection between the elastic part and the top part is maintained, and wherein and the base part (440) comprises a base engagement portion (442), which is engaged with the elastic part such that the connection between the elastic part and the base part is maintained.

8. A composite washer (400) according to claim 7, wherein the top engagement portion (422) comprises a first inclined surface (423) which circumferentially extends around the axis (A) and wherein the first inclined surface faces away from the axis and towards the base part (440) and wherein the base engagement portion (442) comprises a second inclined surface (443) which circumferentially extends around the axis (A) wherein the second inclined surface faces away from the axis and towards the top part (420).

9. A composite washer (500) according to any preceding claim wherein the top part (520) comprises a first contact portion (525) and the base part (540) comprises a second contact portion (545) wherein the first contact portion is in direct contact with the second contact portion.

10. A composite washer (500) according to claim 9 wherein the first contact portion (525) restricts the second contact portion (545) from transversal movement in a plane perpendicular to the axis (A).

11. A composite washer (600) according to claim 9 or 10 wherein the first contact portion (625) comprises a first locking element (624) and the second contact portion (645) comprises a second locking element (644) wherein the first locking element is engaged with the second locking element such that the connection between the first contact portion and the second contact portion is maintained.

12. A composite washer (700) according to any preceding claim wherein at least one of the top part (720) and the base part (740) comprises inner recesses in an inner surface being in contact with the elastic part (730).

13. A composite washer (700) according to any preceding claim wherein at least one of the top part (720) and the base part (740) comprises an outer surface which is perpendicular to the axis (A) and faces away from the elastic part (730) wherein the outer surface comprises outer recesses (727).

14. A system (900) for anchoring a post for a fence to a building construction, comprising a composite washer (100) according to any preceding claim.

15. A system (1100) for indicating safe lifting force comprising:
a composite washer (100) according to any of claims 1-13;
a lower lifting pin (1110) comprising a lower flat portion (1111) and a lifting portion (1112); and
an upper lifting pin (1120) comprising an upper flat portion (1121) and a carrier portion (1122), wherein the lifting portion is arranged for being lifted and the carrier portion is arranged for carrying a load,
wherein the washer (100) is arranged between the lifting portion and the carrier portion such that when the system is lifted and carries a load, the lower flat portion and the upper flat portion is arranged to compress the composite washer along the axis (A).

## Patentansprüche

1. Verbundwerkstoffscheibe (100) zur Kraftanzeige und zum Verhindern des Lösens eines Befestigungselements, die Verbundwerkstoffscheibe umfassend
ein oberes Teil (120), das eine Umfangserstreckung um eine Achse (A) aufweist,
ein elastisches Teil (130), das eine Umfangserstreckung um die Achse aufweist,
ein Basisteil (140), das eine Umfangserstreckung um die Achse aufweist,
wobei das obere Teil, das elastische Teil und das Basisteil miteinander verbunden sind,
wobei das elastische Teil zwischen dem oberen Teil und dem Basisteil angeordnet ist, wobei eine zentrale Öffnung (102) vorhanden ist, die eine Erstreckung entlang der Achse durch das obere Teil, das elastische Teil und das Basisteil aufweist,
wobei die Verbundwerkstoffscheibe so angeordnet ist, dass sie in einem primären Zustand sein kann, in dem das elastische Teil an einer Seitenfläche davon sichtbar ist, und
wobei die Verbundwerkstoffscheibe so angeordnet ist, dass sie in einem sekundären Zustand sein kann, in dem das elastische Teil von dem oberen Teil und dem Basisteil derart zusammengedrückt wird, dass das elastische Teil an seiner Seitenfläche von dem oberen Teil und/oder dem Basisteil versteckt wird.

2. Verbundwerkstoffscheibe (200) nach Anspruch 1, wobei das elastische Teil (230) von einem oberen Abschnitt (231) über einen mittleren Abschnitt (232) bis zu einem unteren Abschnitt (233) davon eine Längserstreckung entlang der Achse (A) aufweist, wobei, wenn das elastische Teil nicht zusammengedrückt ist, ein erster Innendurchmesser (D1) am oberen Abschnitt sich von einem zweiten Innendurchmesser (D2) am mittleren Abschnitt unterscheidet.

3. Verbundwerkstoffscheibe (200) nach Anspruch 2, wobei der erste Innendurchmesser (D1) kleiner ist als der zweite Innendurchmesser (D2).

4. Verbundwerkstoffscheibe (300) nach einem der vorhergehenden Ansprüche, wobei das elastische Teil (330) eine Nut (334) aufweist, die sich in Umfangsrichtung um eine der Achse (A) zugewandte Innenfläche des elastischen Teils (330) erstreckt.

5. Verbundwerkstoffscheibe (100) nach einem der vorhergehenden Ansprüche, wobei das elastische Teil (130) aus dem Material Polyurethan hergestellt ist.

6. Verbundwerkstoffscheibe (100) nach einem der vorhergehenden Ansprüche, wobei das obere Teil (120) einen äußeren oberen Wandabschnitt (121) umfasst, der sich in Umfangsrichtung um die Achse (A) erstreckt, wobei der äußere obere Wandabschnitt eine Längserstreckung in Richtung des Basisteils (140) aufweist, wobei das Basisteil einen äußeren Basiswandabschnitt (141) umfasst, der sich in Umfangsrichtung um die Achse erstreckt, und wobei der äußere Basiswandabschnitt eine Längserstreckung in Richtung des oberen Teils aufweist.

7. Verbundwerkstoffscheibe (400) nach einem der vorhergehenden Ansprüche, wobei das obere Teil (420) einen oberen Eingriffsabschnitt (422) umfasst, der mit dem elastischen Teil (430) in Eingriff steht, so dass die Verbindung zwischen dem elastischen Teil und dem oberen Teil aufrechterhalten wird, und wobei das Basisteil (440) einen Basiseingriffsabschnitt (442) umfasst, der mit dem elastischen Teil in Eingriff steht, so dass die Verbindung zwischen dem elastischen Teil und dem Basisteil aufrechterhalten wird.

8. Verbundwerkstoffscheibe (400) nach Anspruch 7, wobei der obere Eingriffsabschnitt (422) eine erste geneigte Fläche (423) umfasst, die sich in Umfangsrichtung um die Achse (A) erstreckt, und wobei die erste geneigte Fläche von der Achse weg und in Richtung des Basisteils (440) gewandt ist, und wobei der Basiseingriffsabschnitt (442) eine zweite geneigte Fläche (443) umfasst, die sich in Umfangsrichtung um die Achse (A) erstreckt, wobei die zweite geneigte Fläche von der Achse weg und in Richtung des oberen Teils (420) gewandt ist.

9. Verbundwerkstoffscheibe (500) nach einem der vorhergehenden Ansprüche, wobei das obere Teil (520) einen ersten Kontaktabschnitt (525) umfasst und das Basisteil (540) einen zweiten Kontaktabschnitt (545) umfasst, wobei der erste Kontaktabschnitt in direktem Kontakt mit dem zweiten Kontaktabschnitt steht.

10. Verbundwerkstoffscheibe (500) nach Anspruch 9, wobei der erste Kontaktabschnitt (525) den zweiten Kontaktabschnitt (545) in einer transversalen Bewegung in einer zur Achse (A) senkrechten Ebene einschränkt.

11. Verbundwerkstoffscheibe (600) nach Anspruch 9 oder 10, wobei der erste Kontaktabschnitt (625) ein erstes Verriegelungselement (624) umfasst und der zweite Kontaktabschnitt (645) ein zweites Verriegelungselement (644) umfasst, wobei das erste Verriegelungselement mit dem zweiten Verriegelungselement in Eingriff steht, so dass die Verbindung zwischen dem ersten Kontaktabschnitt und dem zweiten Kontaktabschnitt aufrechterhalten wird.

12. Verbundwerkstoffscheibe (700) nach einem der vorhergehenden Ansprüche, wobei das obere Teil (720) und/oder das Basisteil (740) innere Vertiefungen in einer Innenfläche umfasst, die in Kontakt mit dem elastischen Teil (730) steht.

13. Verbundwerkstoffscheibe (700) nach einem der vorhergehenden Ansprüche, wobei das obere Teil (720) und/oder das Basisteil (740) eine Außenfläche umfasst, die senkrecht zur Achse (A) verläuft und von dem elastischen Teil (730) weg gewandt ist, wobei die Außenfläche äußere Vertiefungen (727) umfasst.

14. System (900) zum Verankern eines Pfostens für einen Zaun an einer Gebäudekonstruktion, das eine Verbundwerkstoffscheibe (100) nach einem der vorhergehenden Ansprüche umfasst.

15. System (1100) zum Anzeigen einer sicheren Hebekraft, umfassend:
eine Verbundwerkstoffscheibe (100) nach einem der Ansprüche 1-13;
einen unteren Hebebolzen (1110), der einen unteren flachen Abschnitt (1111) und einen Hebeabschnitt (1112) umfasst; und
einen oberen Hebebolzen (1120), der einen oberen flachen Abschnitt (1121) und einen Trägerabschnitt (1122) umfasst, wobei der Hebeabschnitt so angeordnet ist, dass er angehoben wird, und der Trägerabschnitt so angeordnet ist, dass er eine Last trägt,
wobei die Scheibe (100) zwischen dem Hebeabschnitt und dem Trägerabschnitt angeordnet ist, so dass, wenn das System angehoben wird und eine Last trägt, der untere flache Abschnitt und der obere flache Abschnitt so angeordnet sind, dass sie die Verbundwerkstoffscheibe entlang der Achse (A) zusammendrücken.

## Revendications

1. Rondelle composite (100) pour indiquer une force et empêcher une fixation de se desserrer, la rondelle composite comprenant :
une partie supérieure (120) qui présente une extension circonférentielle autour d'un axe (A),
une partie élastique (130) qui présente une extension circonférentielle autour de l'axe,
une partie de base (140) qui présente une extension circonférentielle autour de l'axe,
dans laquelle la partie supérieure, la partie élastique et la partie de base sont connectées l'une à l'autre,
dans laquelle la partie élastique est agencée entre la partie supérieure et la partie de base, dans laquelle il y a une ouverture centrale (102) qui présente une extension le long de l'axe à travers la partie supérieure, la partie élastique et la partie de base,
dans laquelle la rondelle composite est agencée pour être dans un état principal où la partie élastique est visible sur une surface latérale de celle-ci, et
dans laquelle la rondelle composite est agencée pour être dans un état secondaire où la partie élastique est comprimée par la partie supérieure et la partie de base de telle façon que la partie élastique est cachée par au moins une de la partie supérieure et de la partie de base, sur la surface latérale de celle-ci.

2. Rondelle composite (200) selon la revendication 1, dans laquelle la partie élastique (230) présente une extension longitudinale le long de l'axe (A), d'une partie supérieure (231), en passant par une partie médiane (232), à une partie inférieure (233), dans laquelle quand la partie élastique n'est pas comprimée, un premier diamètre intérieur (D1) à la partie supérieure est différent d'un second diamètre intérieur (D2) à la partie médiane.

3. Rondelle composite (200) selon la revendication 2, dans laquelle le premier diamètre intérieur (D1) est plus petit que le second diamètre intérieur (D2).

4. Rondelle composite (300) selon l'une quelconque revendication précédente, dans laquelle la partie élastique (330) comprend une rainure (334) s'étendant de manière circonférentielle autour d'une surface intérieure de la partie élastique (330) faisant face à l'axe (A).

5. Rondelle composite (100) selon l'une quelconque revendication précédente, dans laquelle la partie élastique (130) est faite de matériau polyuréthane.

6. Rondelle composite (100) selon l'une quelconque revendication précédente, dans laquelle la partie supérieure (120) comprend une partie de paroi supérieure extérieure (121) qui s'étend de manière circonférentielle autour de l'axe (A), dans laquelle la partie de paroi supérieure extérieure présente une extension longitudinale vers la partie de base (140), dans laquelle la partie de base comprend une partie de paroi de base extérieure (141) qui s'étend de manière circonférentielle autour de l'axe, et dans laquelle la partie de paroi de base extérieure présente une extension longitudinale vers la partie supérieure.

7. Rondelle composite (400) selon l'une quelconque revendication précédente, dans laquelle la partie supérieure (420) comprend une partie d'engagement supérieure (422) qui est engagée avec la partie élastique (430) de telle façon que la connexion entre la partie élastique et la partie supérieure est maintenue, et dans laquelle et la partie de base (440) comprend une partie d'engagement de base (442) qui est engagée avec la partie élastique de telle façon que la connexion entre la partie élastique et la partie de base est maintenue.

8. Rondelle composite (400) selon la revendication 7, dans laquelle la partie d'engagement supérieure (422) comprend une première surface inclinée (423) qui s'étend de manière circonférentielle autour de l'axe (A) et dans laquelle la première surface inclinée est orientée à distance de l'axe et en direction de la partie de base (440), et dans laquelle la partie d'engagement de base (442) comprend une seconde surface inclinée (443) qui s'étend de manière circonférentielle autour de l'axe (A), dans laquelle la seconde surface inclinée est orientée à distance de l'axe et en direction de la partie supérieure (420).

9. Rondelle composite (500) selon l'une quelconque revendication précédente, dans laquelle la partie supérieure (520) comprend une première partie de contact (525) et la partie de base (540) comprend une seconde partie de contact (545), dans laquelle la première partie de contact est en contact direct avec la seconde partie de contact.

10. Rondelle composite (500) selon la revendication 9, dans laquelle la première partie de contact (525) restreint la seconde partie de contact (545) d'un mouvement transversal dans un plan perpendiculaire à l'axe (A).

11. Rondelle composite (600) selon la revendication 9 ou 10, dans laquelle la première partie de contact (625) comprend un premier élément de verrouillage (624) et la seconde partie de contact (645) comprend un second élément de verrouillage (644), dans laquelle le premier élément de verrouillage est engagé avec le second élément de verrouillage de telle façon que la connexion entre la première partie de contact et la seconde partie de contact est maintenue.

12. Rondelle composite (700) selon l'une quelconque revendication précédente, dans laquelle au moins une de la partie supérieure (720) et de la partie de base (740) comprend des creux intérieurs dans une surface intérieure étant en contact avec la partie élastique (730).

13. Rondelle composite (700) selon l'une quelconque revendication précédente, dans laquelle au moins une de la partie supérieure (720) et de la partie de base (740) comprend une surface extérieure qui est perpendiculaire à l'axe (A) et est orientée à distance de la partie élastique (730), dans laquelle la surface extérieure comprend des creux extérieurs (727).

14. Système (900) pour ancrer un pilier pour une barrière à une construction de bâtiment, comprenant une rondelle composite (100) selon l'une quelconque revendication précédente.

15. Système (1100) pour indiquer une force de levage sûre, comprenant :
une rondelle composite (100) selon l'une quelconque des revendications 1-13 ;
une broche de levage inférieure (1110) comprenant une partie plate inférieure (1111) et une partie de levage (1112) ; et
une broche de levage supérieure (1120) comprenant une partie plate supérieure (1121) et une partie de transport (1122), dans lequel la partie de levage est agencée pour être levée et la partie de transport est agencée pour transporter une charge,
dans lequel la rondelle (100) est agencée entre la partie de levage et la partie de transport de telle façon que lorsque le système est levé et
transporte une charge, la partie plate inférieure et la partie plate supérieure est agencée pour comprimer la rondelle composite le long de l'axe (A).
